# EUROPEAN PATENT APPLICATION

(11) **EP 4 576 877 A1**
(43) Date of publication of application: **25.06.2025**
(21) Application number: 23867157.2
(22) Date of filing: 08.08.2023
(51) Int. Cl.: H04W 40/22

(54) **NODE MANAGEMENT METHOD, COMMUNICATION DEVICE, STORAGE MEDIUM, AND PROGRAM PRODUCT**

(30) Priority: 19.09.2022 CN 202211147352
(71) Applicant: ZTE Corporation, Shenzhen, Guangdong 518057 (CN)
(72) Inventor: YE, Zhengzheng, Shenzhen, Guangdong 518057 (CN); LI, Ping, Shenzhen, Guangdong 518057 (CN); WU, Yiming, Shenzhen, Guangdong 518057 (CN)
(74) Representative: Savi, Massimiliano
(86) International application number: PCT/CN2023/111756
(87) International publication number: WO 2024/060862

(57) **Abstract**

Embodiments of the present application provide a node management method, a communication device, a storage medium, and a program product. The node management method comprises: a relay node receiving first cooperative signaling from a sending node, and then parsing the first cooperative signaling at a first preset time-frequency domain position according to a pre-received cooperative configuration instruction to obtain a node management parameter (S 1000); and then managing the relay node according to the node management parameter (S2000).

## Description

### CROSS-REFERENCE TO RELATED APPLICATION

This application is filed on the basis of Chinese patent application No. 202211147352.0 filed September 19, 2022, and claims priority to the Chinese patent application, the entire contents of which are incorporated herein by reference.

### TECHNICAL FIELD

Embodiments of the present disclosure relate to the technical field of communication, and more particularly, to a node management method, a communication device, a storage medium, and a program product.

### BACKGROUND

In the related technologies, a relay node is provided between a sending node and a receiving node, and can control a channel between the sending node and the receiving node. However, in some cases, interaction instructions between the relay node and the sending node generally require the relay node to have a high processing capability. If the processing capability of the relay node is not high enough, the effect and reliability of interaction between the relay node and the sending node may be compromised.

### SUMMARY

Embodiments of the present disclosure provide a node management method, a communication device, a storage medium, and a program product.

In accordance with a first aspect of the present disclosure, an embodiment provides a node management method, including: in response to receiving a first collaboration signaling from a sending node, parsing the first collaboration signaling at a first preset resource position according to a pre-received collaboration configuration instruction to obtain a node management parameter; and performing node management according to the node management parameter.

In accordance with a second aspect of the present disclosure, an embodiment provides a node management method, including: configuring a first collaboration signaling at a first preset resource position according to a pre-received collaboration configuration instruction; and sending the first collaboration signaling to a relay node, for the relay node to parse the first collaboration signaling at the first preset resource position to obtain a node management parameter and perform node management according to the node management parameter.

In accordance with a third aspect of the present disclosure, an embodiment of the present disclosure provides a communication device, including: at least one processor; and at least one memory, configured for storing at least one program, where the at least one program, when executed by the at least one processor, causes the at least one processor to implement the node management method in accordance with the first aspect or the node management method in accordance with the second aspect.

In accordance with a fourth aspect of the present disclosure, an embodiment provides a computer-readable storage medium, storing a processor-executable program, where the processor-executable program, when executed by a processor, causes the processor to implement the node management method in accordance with the first aspect or the node management method in accordance with the second aspect.

In accordance with a fifth aspect of the present disclosure, an embodiment provides a computer program product, including a computer program or computer instructions stored in a computer-readable storage medium, where a processor of a computer device reads the computer program or the computer instructions from the computer-readable storage medium and executes the computer program or the computer instructions to cause the computer device to implement the node management method in accordance with the first aspect or the node management method in accordance with the second aspect.

### BRIEF DESCRIPTION OF DRAWINGS

FIG. 1 is a schematic diagram illustrating a communication system according to an embodiment of the present disclosure;
FIG. 2 is a flowchart illustrating a node management method executed by a relay node according to an embodiment of the present disclosure;
FIG. 3 is a flowchart illustrating a node management method according to an embodiment of the present disclosure;
FIG. 4 is a flowchart illustrating a node management method according to an embodiment of the present disclosure;
FIG. 5 is a flowchart illustrating a node management method executed by a sending node according to an embodiment of the present disclosure;
FIG. 6 is a flowchart illustrating a node management method according to an embodiment of the present disclosure;
FIG. 7 is a schematic diagram illustrating a transmission position of a collaboration signaling between a sending node and a relay node according to an embodiment of the present disclosure;
FIG. 8 is a flowchart illustrating interaction between a sending node and a relay node according to an embodiment of the present disclosure;
FIG. 9 is a schematic diagram illustrating a configuration of a collaboration signaling in a single-relay node scenario according to an embodiment of the present disclosure;
FIG. 10 is a schematic diagram illustrating a configuration of a first collaboration signaling and a second collaboration signaling according to an embodiment of the present disclosure;
FIG. 11 is a schematic diagram illustrating a scenario in which a sending node and a plurality of relay nodes collaborate according to an embodiment of the present disclosure;
FIG. 12 is a schematic diagram illustrating a configuration of a collaboration signaling in a multi-relay node scenario according to an embodiment of the present disclosure;
FIG. 13 is a flowchart illustrating interaction between a sending node and relay nodes in a multi-relay node scenario according to an embodiment of the present disclosure; and
FIG. 14 is a schematic structural diagram illustrating a communication device according to an embodiment of the present disclosure.

### DETAILED DESCRIPTION

To make the purposes, technical schemes, and advantages of the present disclosure clearer, the present disclosure is described in further detail in conjunction with accompanying drawings and embodiments. It should be understood that the embodiments described herein are merely used for illustrating the present disclosure, and are not intended to limit the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

In the embodiments of the present disclosure, any embodiment or design described following the terms such as "in an embodiment," "in some embodiments," and "for example" is used to indicate examples, explanations, or illustrations, and should not be construed as being superior or advantageous over other embodiments or designs. The use of the terms such as "in an embodiment," "in some embodiments," and "for example" is intended to present the relevant concepts.

In the related technologies, a relay node is provided between a sending node and a receiving node, and can control a channel between the sending node and the receiving node. However, in some cases, interaction instructions between the relay node and the sending node generally require the relay node to have a high processing capability. If the processing capability of the relay node is not high enough, the effect and reliability of interaction between the relay node and the sending node will be unsatisfactory.

The relay node may be a Reconfigurable Intelligent Surface (RIS), which is an artificial electromagnetic material with programmable electromagnetic characteristics. By controlling the phase of each array element in the RIS, the outgoing beam can be controlled to focus to the desired direction or point to achieve control of the electromagnetic environment. At present, interaction instructions between a base station and an RIS generally require the RIS to have a high processing capability, and no specific signaling transmission and interface scheme has been defined.

Therefore, the present disclosure provides a node management method, a communication device, a computer-readable storage medium, and a computer program product, to improve the effect and reliability of interaction between a sending node and a relay node. In the embodiments of the present disclosure, a time-frequency domain position for parsing a collaboration signaling is defined, and a relay node can be managed according to a node management parameter. As such, an interaction interface and behavior between the sending node and the relay node are agreed on in the embodiments of the present disclosure, such that reliable and efficient communication between the sending node and the relay node can be achieved.

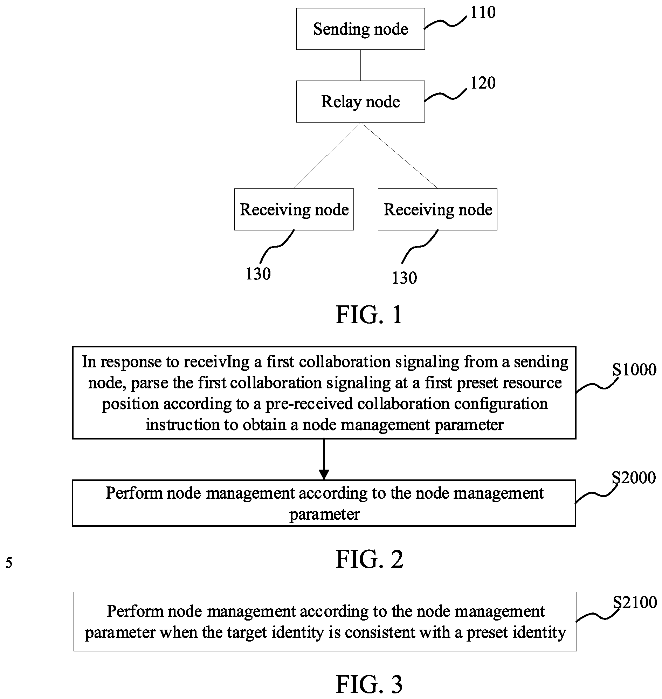

FIG. 1 is a schematic diagram illustrating a communication system according to an embodiment of the present disclosure. The communication system includes a sending node 110, a relay node 120, and a receiving node 130. The communication system needs to use the relay node 120 to forward signals, so as to implement communication between the sending node 110 and the receiving node 130.

The technical schemes of the embodiments of the present disclosure may be applied to various communication systems, such as a Wideband Code Division Multiple Access (WCDMA) mobile communication system, an Evolved Universal Terrestrial Radio Access Network (E-UTRAN) system, a Next Generation Radio Access Network (NG-RAN) system, a Long Term Evolution (LTE) system, a Worldwide Interoperability for Microwave Access (WiMAX) communication system, a 5th generation (5G) system such as new radio access technology (NR), and future communication systems such as a 6th generation (6G) system.

The technical schemes of the embodiments of the present disclosure may be applied to various communication technologies, such as microwave communication, light wave communication, millimeter wave communication, etc. The specific technology and the specific equipment form used by the receiving node are not limited in the embodiments of the present disclosure.

In an embodiment of the present disclosure, the sending node 110 may be an evolved NodeB (eNB), a Transmission Reception Point (TRP), a Next Generation NodeB (gNB) in an NR system, a base station in other future mobile communication systems, or a sending node in a Wireless Fidelity (Wi-Fi) system, etc. The specific technology and the specific equipment form used by the sending node are not limited in the embodiments of the present disclosure.

In an embodiment of the present disclosure, the receiving node 130 is an entity on the user side for receiving or transmitting signals, such as a mobile phone. The receiving node may also be referred to as a terminal, a user equipment (UE), a mobile station (MS), a mobile terminal (MT), etc. The receiving node may be a vehicle having a communication function, an intelligent vehicle, a mobile phone, a wearable device, a tablet computer (Pad), a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, etc. The specific technology and the specific equipment form used by the receiving node are not limited in the embodiments of the present disclosure.

The relay node 120 in the embodiments of the present disclosure may be any network device having a wireless signal relay capability, i.e., having a capability of receiving a wireless signal and wirelessly forwarding the wireless signal. The relay node may be a repeater, an RIS, a smart repeater, etc. The specific technology and the specific equipment form used by the relay node are not limited in the embodiments of the present disclosure.

In the embodiments of the present disclosure, an example where the sending node is a base station and the relay node is an RIS is described. However, those having ordinary skills in the art can understand that other types of sending nodes such as a TRP and gNB or other types of relay nodes such as a smart repeater are also suitable for the node management method provided in the embodiments of the present disclosure.

FIG. 2 is a flowchart illustrating a node management method executed by a relay node according to an embodiment of the present disclosure. As shown in FIG. 2, the node management method may include, but not limited to, the following steps S1000 and S2000.

At S 1000, in response to a first collaboration signaling being received from a sending node, and the first collaboration signaling is parsed at a first preset resource position according to a pre-received collaboration configuration instruction to obtain a node management parameter.

In an embodiment, the relay node may receive a collaboration configuration instruction in advance, and then determine, according to the collaboration configuration instruction, a position for parsing a collaboration signaling between the relay node and the sending node. When the relay node receives a first collaboration signaling delivered by the sending node, the relay node may parse the first collaboration signaling at a first preset resource position determined by the collaboration configuration instruction, to obtain a node management parameter in the first collaboration signaling.

In an embodiment, the collaboration configuration instruction is used for defining a specific time-frequency resource position of the collaboration signaling, and may be obtained through Radio Resource Control (RRC) or Media Access Control (MAC) configuration, i.e., may be configured and delivered by RRC or MAC to the sending node and the relay node. The collaboration configuration instruction may include, but not limited to, at least one of:
(1) a transmit frame number and slot number;
(2) a symbol start position of the first collaboration signaling;
(3) a symbol length of the first collaboration signaling;
(4) a frequency domain start position of the first collaboration signaling;
(5) a quantity of frequency domain resources occupied by the first collaboration signaling;
(6) a symbol start position for sending a second collaboration signaling to the sending node;
(7) a symbol length for sending a second collaboration signaling to the sending node;
(8) a frequency domain start position for sending a second collaboration signaling to the sending node;
(9) a quantity of frequency domain resources occupied for sending a second collaboration signaling to the sending node;
(10) a status of allocation of a frequency domain resource of a plurality of first collaboration signalings and a frequency domain resource for sending a second collaboration signaling to the sending node; or
(11) a quantity of slots or symbols by which a second collaboration signaling to be sent to the sending node is delayed relative to the first collaboration signaling.

In an embodiment, the first collaboration signaling may be used as a dedicated communication instruction between the sending node and the relay node, and may be sent through a guard period (GP) symbol, i.e., the sending node may send the first collaboration signaling to the relay node through a guard period symbol.

In an embodiment, the first collaboration signaling may include, but not limited to, at least one of:
(1) a node indication identifier for representing a quantity of nodes correspondingly controlled by the first collaboration signaling;
(2) a target identity for representing node identity information of one or more nodes correspondingly controlled by the first collaboration signaling;
(3) a cell identity;
(4) a system frame number; or
(5) the node management parameter.

At S2000, node management is performed according to the node management parameter.

In an embodiment, after the relay node parses the first collaboration signaling to obtain the node management parameter, the relay node performs node management on itself according to the node management parameter.

FIG. 3 is a flowchart illustrating a node management method according to an embodiment of the present disclosure. When the first collaboration signaling includes the target identity, S2000 may include, but not limited to, a following step S2100.

At S2100, node management is performed according to the node management parameter when the target identity is consistent with a preset identity.

In an embodiment, a preset identity is set in advance for the relay node, and if the target identity in the first collaboration signaling is consistent with the preset identity of the relay node, indicating that the current relay node is a control object, the current relay node performs node management according to the node management parameter.

In an embodiment, the node management parameter in the first collaboration signaling may include, but not limited to, at least one of:
(1) an extended reference signal for timing synchronization, channel estimation, or power control;
(2) a state control parameter for controlling an operation state; or
(3) a codebook identifier for determining a target codebook corresponding to the codebook identifier and generating a beam according to the target codebook.

In an embodiment, the state control parameter may include, but not limited to, at least one of:
(1) an on/off control parameter;
(2) a beam sweeping control parameter;
(3) a power control parameter;
(4) a detection period control parameter;
(5) an orientation control parameter;
(6) an operation mode control parameter; or
(7) a codebook set switching parameter.

In an embodiment, the node management parameter may be a pseudo-random sequence, such as a maximum-length sequence (m-sequence), a Zadoff Chu (ZC) sequence, a Pseudo-Noise (PN) sequence, etc.

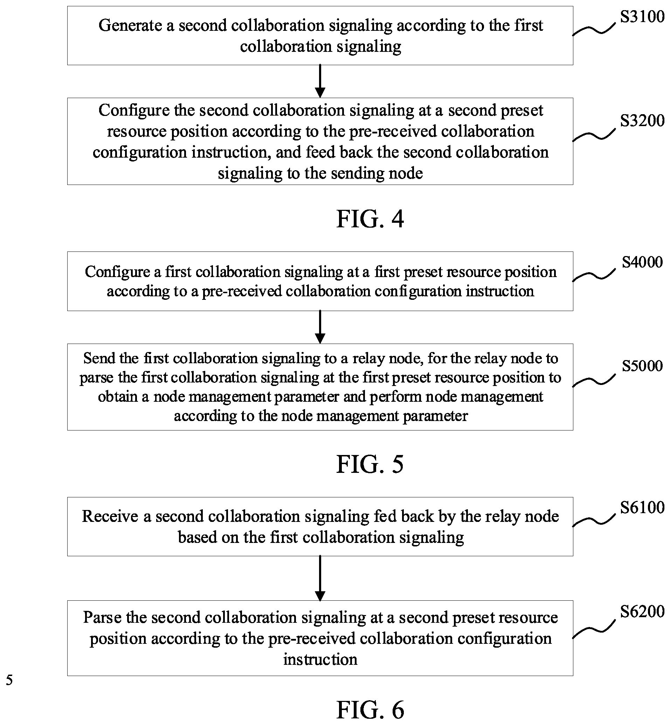

FIG. 4 is a flowchart illustrating a node management method according to an embodiment of the present disclosure. After receiving a first collaboration signaling from a sending node in S1000, the node management method further includes, but not limited to, the following steps S3100 and S3200.

At S3100, a second collaboration signaling is generated according to the first collaboration signaling.

At S3200, the second collaboration signaling is configured at a second preset resource position according to the pre-received collaboration configuration instruction, and is fed back to the sending node.

In an embodiment, after receiving the first collaboration signaling from the sending node, the relay node further generates a second collaboration signaling according to the first collaboration signaling, determines, according to the pre-received collaboration configuration instruction, a position for parsing a collaboration signaling between the relay node and the sending node, i.e., determines a second preset resource position according to the pre-received collaboration configuration instruction, configures the second collaboration signaling at the second preset resource position, and feeds back the configured second collaboration signaling to the sending node.

In an embodiment, the relay node may feed back the second collaboration signaling to the sending node by, for example, but not limited to, the following means.

First means: the relay node feeds back the second collaboration signaling to the sending node through a guard period symbol.

Second means: the relay node feeds back the second collaboration signaling to the sending node through a physical uplink channel.

Third means: the relay node feeds back the second collaboration signaling to the sending node through a transmission request.

In an embodiment, the second collaboration signaling may include, but not limited to, at least one of:
(1) a preset identity of the relay node;
(2) an indication indicating that parsing of the first collaboration signaling by the relay node is successful;
(3) an indication indicating that parsing of the first collaboration signaling by the relay node fails;
(4) a current codebook identifier of the relay node;
(5) a current operation mode of the relay node; or
(6) a current functional state of the relay node.

In an embodiment, the first preset resource position and the second preset resource position may include at least one of a time domain position or a frequency domain position.

FIG. 5 is a flowchart illustrating a node management method executed by a sending node according to an embodiment of the present disclosure. As shown in FIG. 5, the node management method may include, but not limited to, the following steps S4000 and S5000.

At S4000, a first collaboration signaling is configured at a first preset resource position according to a pre-received collaboration configuration instruction.

At S5000, the first collaboration signaling is sent to a relay node, for the relay node to parse the first collaboration signaling at the first preset resource position to obtain a node management parameter and perform node management according to the node management parameter.

In an embodiment, the sending node may receive a collaboration configuration instruction in advance, and then determine, according to the collaboration configuration instruction, a position for parsing a collaboration signaling between a relay node and the sending node. After generating the first collaboration signaling, the sending node may determine a first preset resource position according to the collaboration configuration instruction received in advance, configure a first collaboration signaling at the first preset resource position, and send the configured first collaboration signaling to the relay node. After receiving the first collaboration signaling delivered by the sending node, the relay node may parse the first collaboration signaling at the first preset resource position determined by the collaboration configuration instruction, to obtain a node management parameter in the first collaboration signaling, and finally perform node management on itself according to the node management parameter.

In an embodiment, the collaboration configuration instruction is used for defining a specific time-frequency resource position of the collaboration signaling, and may be obtained through RRC or MAC configuration, i.e., may be configured and delivered by RRC or MAC to the sending node and the relay node. The collaboration configuration instruction may include, but not limited to, at least one of:
(1) a transmit frame number and slot number;
(2) a symbol start position of the first collaboration signaling;
(3) a symbol length of the first collaboration signaling;
(4) a frequency domain start position of the first collaboration signaling;
(5) a quantity of frequency domain resources occupied by the first collaboration signaling;
(6) a symbol start position for sending a second collaboration signaling to the sending node;
(7) a symbol length for sending a second collaboration signaling to the sending node;
(8) a frequency domain start position for sending a second collaboration signaling to the sending node;
(9) a quantity of frequency domain resources occupied for sending a second collaboration signaling to the sending node;
(10) a status of allocation of a frequency domain resource of a plurality of first collaboration signalings and a frequency domain resource for sending a second collaboration signaling to the sending node; or
(11) a quantity of slots or symbols by which a second collaboration signaling to be sent to the sending node is delayed relative to the first collaboration signaling.

In an embodiment, the first collaboration signaling may be used as a dedicated communication instruction between the sending node and the relay node, and may be sent through a GP symbol, i.e., the sending node may send the first collaboration signaling to the relay node through a guard period symbol.

In an embodiment, the first collaboration signaling may include, but not limited to, at least one of:
(1) a node indication identifier for representing a quantity of nodes correspondingly controlled by the first collaboration signaling;
(2) a target identity for representing node identity information of one or more nodes correspondingly controlled by the first collaboration signaling;
(3) a cell identity;
(4) a system frame number; or
(5) the node management parameter.

In an embodiment, the node management parameter in the first collaboration signaling may include, but not limited to, at least one of:
(1) an extended reference signal for timing synchronization, channel estimation, or power control;
(2) a state control parameter for controlling an operation state; or
(3) a codebook identifier for determining a target codebook corresponding to the codebook identifier and generating a beam according to the target codebook.

In an embodiment, the state control parameter may include, but not limited to, at least one of:
(1) an on/off control parameter;
(2) a beam sweeping control parameter;
(3) a power control parameter;
(4) a detection period control parameter;
(5) an orientation control parameter;
(6) an operation mode control parameter; or
(7) a codebook set switching parameter.

In an embodiment, the node management parameter may be a pseudo-random sequence, such as a maximum-length sequence (m-sequence), a Zadoff Chu (ZC) sequence, a Pseudo-Noise (PN) sequence, etc.

FIG. 6 is a flowchart illustrating a node management method according to an embodiment of the present disclosure. After sending the first collaboration signaling to a relay node in S5000, the node management method further includes, but not limited to, the following steps S6100 and S6200.

At S6100, a second collaboration signaling fed back by the relay node based on the first collaboration signaling is received.

At S6200, the second collaboration signaling is parsed at a second preset resource position according to the pre-received collaboration configuration instruction.

In an embodiment, after receiving the first collaboration signaling from the sending node, the relay node further generates a second collaboration signaling according to the first collaboration signaling, determines, according to the pre-received collaboration configuration instruction, a position for parsing a collaboration signaling between the relay node and the sending node, i.e., determines a second preset resource position according to the pre-received collaboration configuration instruction, configures the second collaboration signaling at the second preset resource position, and feeds back the configured second collaboration signaling to the sending node. In addition, the sending node also determines the second preset resource position according to the pre-received collaboration configuration instruction, and parses the second collaboration signaling at the second preset resource position.

In an embodiment, the sending node may receive the second collaboration signaling from the relay node by for example, but not limited to, the following means.

First means: receives the second collaboration signaling fed back by the relay node through a guard period symbol.

Second means: the sending node receives the second collaboration signaling fed back by the relay node through a physical uplink channel.

Third means: the sending node receives the second collaboration signaling fed back by the relay node through a transmission request.

In an embodiment, the second collaboration signaling may include, but not limited to, at least one of:
(1) a preset identity of the relay node;
(2) an indication indicating that parsing of the first collaboration signaling by the relay node is successful;
(3) an indication indicating that parsing of the first collaboration signaling by the relay node fails;
(4) a current codebook identifier of the relay node;
(5) a current operation mode of the relay node; or
(6) a current functional state of the relay node.

In an embodiment, the first preset resource position and the second preset resource position may include at least one of a time domain position or a frequency domain position.

Based on the node management method executed by a relay node and the node management method executed by a sending node, implementation schemes of the embodiments of the present disclosure are provided below.

An implementation scheme of the embodiments of the present disclosure provides an efficient, low-complexity, and high-reliability method for collaboration and interaction between a sending node and a relay node, e.g., a method for collaboration and interaction between a base station and an RIS, where collaboration signaling is used to control the RIS and transmit a codebook ID. The transmission is performed on a GP symbol. The collaboration configuration instruction defines a time-frequency position of the collaboration signaling, and stipulates an interaction interface and behavior between the base station and the RIS, thus achieving effective communication between the base station and a single RIS or multiple RISs.

The time-frequency position of the collaboration signaling exchanged between the sending node and the relay node is as follows. The collaboration signaling is a dedicated communication instruction between the sending node and the relay node. The collaboration configuration instruction defines a specific time-frequency resource position of the collaboration signaling, and is configured and delivered to the sending node and the relay node by RRC or MAC. The collaboration configuration instruction includes one or more of the following:
(1) a transmit frame number and slot number;
(2) a symbol start position of a downlink collaboration signaling;
(3) a symbol length of a downlink collaboration signaling;
(4) a frequency domain start position of a downlink collaboration signaling;
(5) a quantity of frequency domain resources occupied by a downlink collaboration signaling;
(6) a symbol start position of an uplink collaboration signaling;
(7) a symbol length of an uplink collaboration signaling;
(8) a frequency domain start position of an uplink collaboration signaling;
(9) a quantity of frequency domain resources occupied by an uplink collaboration signaling;
(10) frequency domain resource allocation of multiple collaboration signalings in a multi-relay node scenario; and
(11) a quantity of slots or symbols by which an uplink collaboration signaling is delayed relative to a downlink collaboration signaling.

The downlink collaboration signaling is the first collaboration signaling, and the uplink collaboration signaling is the second collaboration signaling.

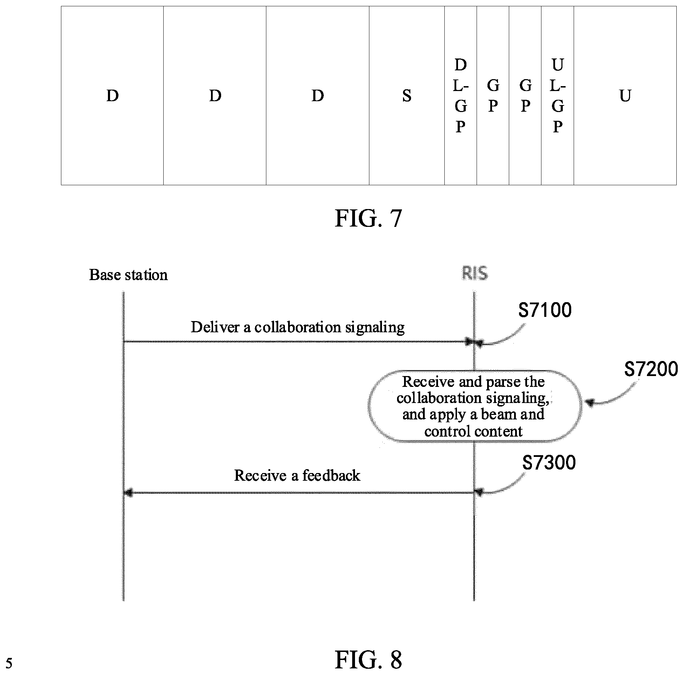

FIG. 7 is a schematic diagram illustrating a transmission position of a collaboration signaling between a sending node and a relay node according to an embodiment of the present disclosure. The content of the collaboration signaling, e.g., a downlink collaboration signaling and an uplink collaboration signaling, is as follows.

The collaboration signaling may be used as a dedicated communication instruction between the sending node and the relay node, and is sent through a GP symbol. The content of the downlink collaboration signaling delivered by the sending node to the relay node includes one or more of the following, wherein (4) to (6) are collectively referred to as collaborative function signalings:
(1) a multi-relay node indication, which is a 1-bit indicator, indicating that the current collaboration signaling controls only one relay node or controls multiple relay nodes;
(2) a serial number or unique ID of a target relay node in a network;
(3) a cell ID and a system frame number;
(4) an extended reference signal for timing synchronization, channel estimation, automatic power control, etc. of the sending node and the relay node;
(5) a control instruction, including, but not limited to, on/off, restart, beam sweeping indication, power control, detection period (how often the RIS performs monitoring), height/downtilt and other mechanical adjustments, and mode switching of the relay node, where modes of the relay node include an energy-saving mode or an ordinary mode, a fixed beam or sweep mode (where the fixed beam mode is semi-static, and the sweep mode is a dynamic scanning mode), a codebook set flag (used to switch a codebook set of the relay node, where the RIS may store multiple sets of codebooks and support codebook switching), etc.;
(6) a codebook ID, which is used for the relay node side to parse the serial number of the codebook and apply the codebook (where the RIS side parses out the serial number of the codebook and then switches to the corresponding codebook to output a beam pointing to the corresponding direction).

In a multi-RIS scenario, a corresponding quantity of collaboration function signals are placed according to the quantity of serial numbers, and the quantity of collaboration function signals is equal to the quantity of serial numbers.

In addition, the uplink collaboration signaling sent by the relay node to the sending node may be sent through a GP symbol, a Physical Uplink Shared Channel (PUSCH), or HARQ. The content of the uplink collaboration signaling includes one or more of the following:
(1) a serial number or unique ID of a current relay node in a network;
(2) a success or failure indication of reception synchronization, control or codebook ID of the relay node, where the feedback signaling may also be placed in a PUSCH;
(3) reporting of a current codebook ID or operation mode of the relay node; and
(4) functional abnormality feedback.

The extended reference signal, the control instruction, and the codebook ID sequence may be transmitted using a pseudo-random sequence including an m-sequence, a ZC sequence, a PN sequence, etc.

In addition, a multi-RIS indication is configured in the downlink collaboration signaling delivered. The multi-RIS indication is a 1-bit indicator, indicating that the current collaboration signaling controls only one RIS or controls multiple RISs. When the current collaboration signaling controls multiple RISs, downlink collaboration function signalings delivered by the base station to the multiple RISs and uplink collaboration function signalings reported by the multiple RISs to the base station need to be placed on the symbol where the collaboration signaling is located. Frequency domain resource allocation of collaboration function signals of multiple RISs is defined in the collaboration configuration instruction. Each RIS reads a target RIS serial number or ID in the collaboration signaling, and compares a serial number or ID of the RIS with the target RIS serial number or ID. If the serial number or ID of the RIS is included in the delivered collaboration signaling, the RIS parses information such as the extended reference signal, the control instruction, and the codebook ID at a time-frequency position corresponding to the RIS, and applies the control instruction and the codebook. If the serial number or ID of the RIS is not included in the collaboration signaling, the RIS does not perform signaling parsing.

FIG. 8 is a flowchart illustrating interaction between a sending node and a relay node according to an embodiment of the present disclosure. In an example where the sending node is a base station and the relay node is an RIS, the interaction process includes, but is not limited, to the following steps S7100, S7200, and S7300.

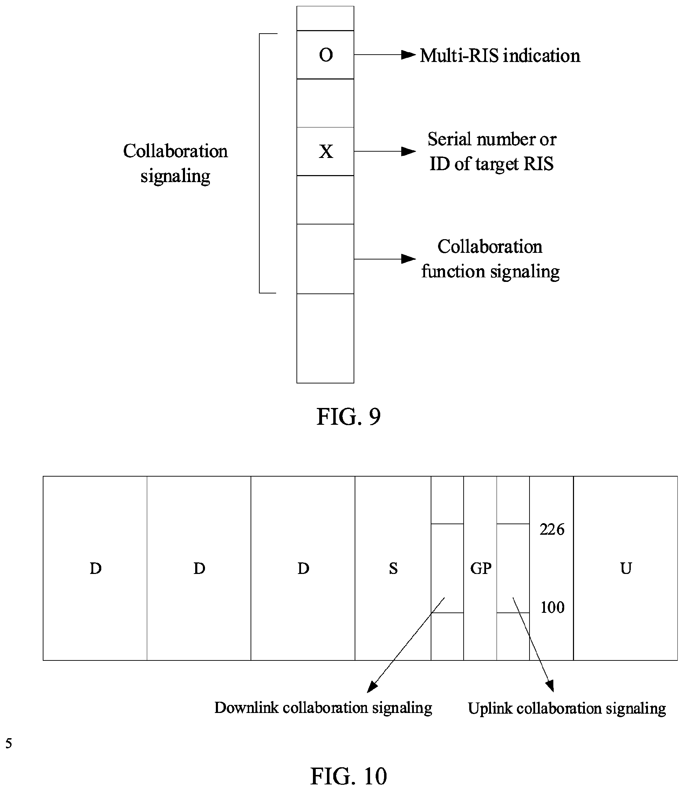

At S7100, the base station delivers a collaboration signaling to the RIS, where a specific sending position is configured and delivered by RRC or MAC, and the collaboration signaling between the base station and the RIS is configured on a corresponding GP symbol. FIG. 9 is a schematic diagram illustrating a configuration of a collaboration signaling in a single-relay node scenario according to an embodiment of the present disclosure, including one or more of the following:
(1) a multi-RIS indication, which is a 1-bit indicator, and is set to 0 here to indicate that only one RIS is controlled;
(2) a serial number or unique ID of a target RIS in a network, where the serial number of the target RIS in the network is x, and an RIS receiving the serial number of the target RIS compares its own serial number with x, and if its own serial number is equal to x, parses and applies the corresponding collaboration function signaling;
(3) a cell ID and a system frame number;
(4) an extended reference signal for timing synchronization, channel estimation, automatic power control, etc., of the base station and the RIS, which is transmitted using pseudo-random sequence;
(5) a control instruction, for adjusting the RIS to the beam sweeping mode, setting the codebook set flag to 5, adjusting the downtilt by 10 degrees, adjusting the height of the RIS by -10 cm, and entering the energy-saving mode; and
(6) a codebook ID, where the codebook ID is set to 150, i.e., codebook 150# in codebook set 5#, and after the RIS side parses the corresponding ID, the codebook is applied to the RIS to output a beam pointing to the corresponding direction.

At S7200, the RIS receives the collaboration signaling, parses the collaboration signaling at a corresponding time-frequency position, applies control content in the collaboration signaling, and if a codebook indication is included the collaboration signaling, the RIS switches to the corresponding codebook.

At S7300, the RIS feeds back a collaboration signaling to the base station, where the collaboration signaling may be sent through a GP symbol, a PUSCH, or HARQ, and includes one or more of the following:
(1) a serial number or unique ID of the current RIS in a network, where the serial number is x;
(2) a success or failure indication of reception synchronization, control or codebook ID of the RIS, where the feedback signaling may also be placed in a PUSCH;
(3) reporting of a current codebook ID or operation mode of the RIS, where the current codebook ID is 150; and
(4) functional abnormality feedback.

If the base station does not receive a feedback indicating a successful reception, the base station needs to send the collaboration signaling again. After the collaboration succeeds, normal uplink and downlink services are started.

In an embodiment, a time-frequency resource position of the collaboration signaling is defined using a collaboration configuration instruction as follows. The collaboration configuration instruction defines a specific time-frequency resource position for sending the collaboration signaling, and is configured and delivered to a first node and a second node by RRC or MAC. In this embodiment, the first node is a base station, and the second node may be a terminal, an RIS, or a smart repeater, where the RIS is used as an example. FIG. 10 is a schematic diagram illustrating a configuration of a first collaboration signaling and a second collaboration signaling according to an embodiment of the present disclosure.

For example, a downlink collaboration signaling is configured to have: a frequency domain start position of 100, a quantity of frequency domain resources of 127, a frame number of 5, a slot number of 13, a symbol start position of 8, and a symbol length of 1, i.e., indicating that the current collaboration signaling occupies RE positions of 100 to 226 in frequency domain, and occupies the 8th symbol of the 13th slot of the 5th frame in time domain. An uplink collaboration signaling is configured to have: a frequency domain start position of 100, a quantity of frequency domain resources of 127, a frame number of 5, a slot number of 13, a symbol start position of 11, and a symbol length of 1, i.e., indicating that the current collaboration signaling occupies RE positions of 100 to 226 in frequency domain, and occupies the 11th symbol of the 13th slot of the 5th frame in time domain.

The base station configures a downlink collaboration signaling at a corresponding position according to an indication in the collaboration configuration instruction and delivers the downlink collaboration signaling to the RIS, and the RIS parses the downlink collaboration signaling at the corresponding time-frequency position. The RIS uploads an uplink collaboration signaling at a time-frequency position indicated, and the base station parses the uplink collaboration signaling at the time-frequency location.

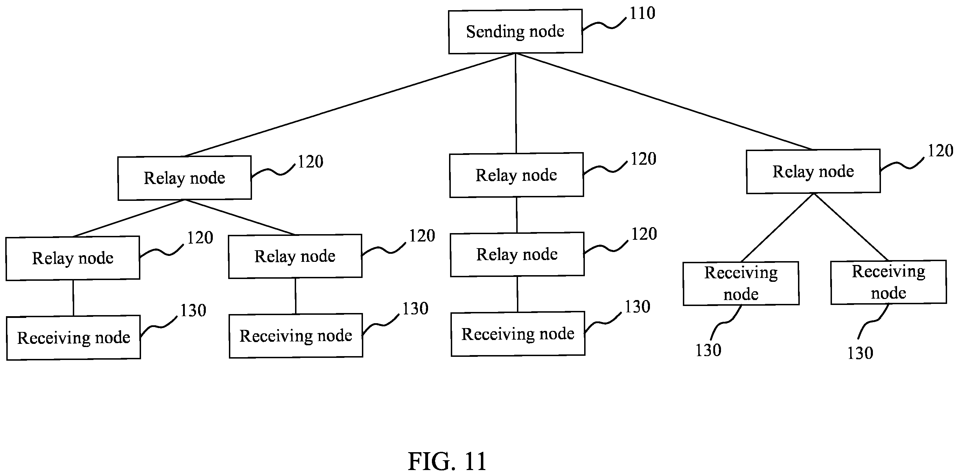

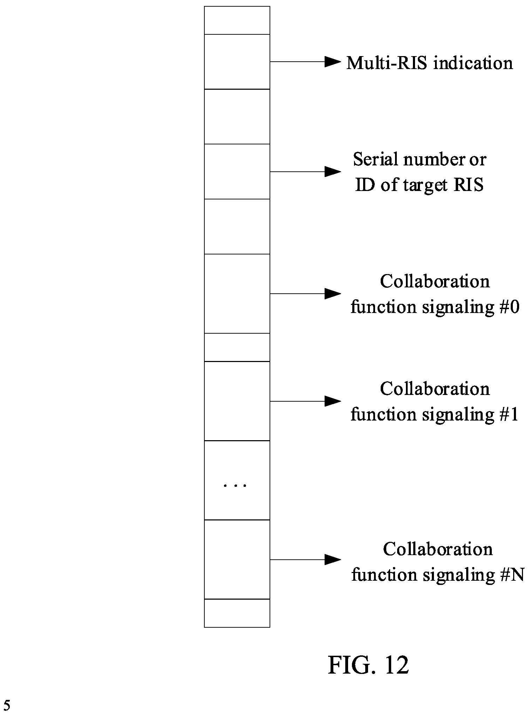

In an embodiment, a process of communication between a base station and a target RIS in a multi-RIS scenario is as follows. In this embodiment, the first node is a base station, and the second node may be a terminal, an RIS, or a smart repeater, where the RIS is used as an example. The multi-RIS scenario means that a base station may be connected to multiple RISs, or there may be a relay or cascade between multiple RISs. An example of a communication system in a multi-RIS scenario is as shown in FIG. 11. A configuration of collaboration signaling in the multi-RIS scenario is as shown in FIG. 12.

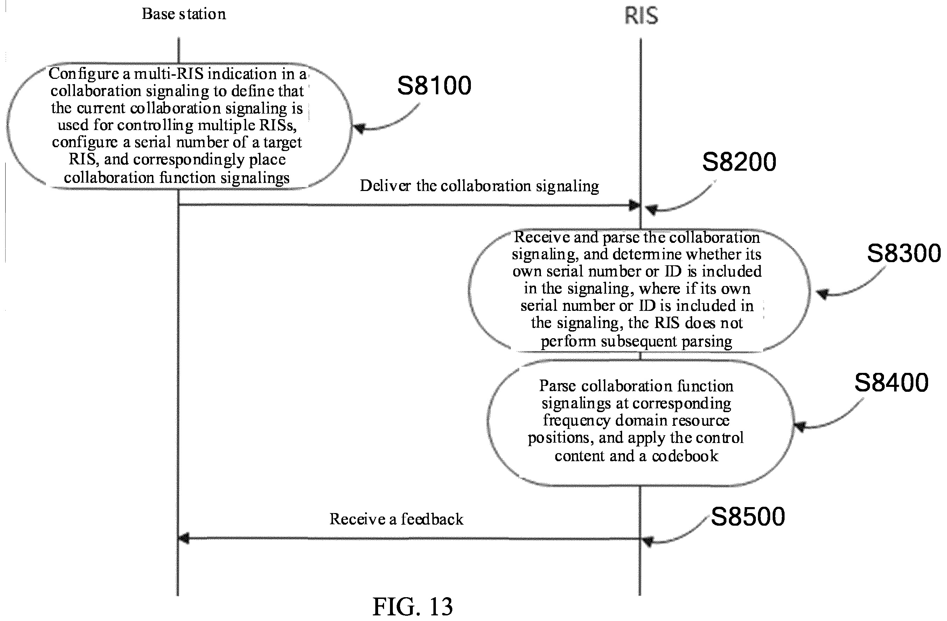

FIG. 13 is a flowchart illustrating interaction between a sending node and relay nodes in a multi-relay node scenario according to an embodiment of the present disclosure, including, but not limited to, the following steps S8100, S8200, S8300, S8400, and S8500.

At S8100, a base station configures a multi-RIS indication (1-bit indicator) in a collaboration signaling to be delivered, to define that the current collaboration signaling is used for controlling multiple RISs, specifies a serial number or unique ID corresponding to a target RIS, and configures a collaboration function signaling having a corresponding serial number at a corresponding time-frequency position.

At S8200, the base station delivers the collaboration signaling to the RIS, where a specific sending position is configured and delivered by RRC or MAC, and the collaboration signaling is transmitted on a corresponding GP symbol or at other time-frequency positions.

At S8300, the RIS receives and parses the collaboration signaling. In the case of a single-RIS scenario, the RIS directly parses the collaboration signaling and applies control content in the collaboration signaling according to Embodiment 1. In the case of a multi-RIS scenario, the RIS determines whether its own serial number is included in the serial number set in the collaboration signaling, and if not, the RIS does not parse the collaboration signaling and apply control content in the collaboration signaling.

At S8400, if the serial number of the RIS is included in the serial number set in the collaboration signaling in the multi-RIS scenario, the RIS reads and parses collaboration function signalings at corresponding frequency domain resource positions according to an order of the serial numbers, and applies the control content and a codebook in the collaboration signaling.

At S8500, the RIS feeds back a collaboration signaling to the base station, where the collaboration signaling includes one or more of the following:
(1) a serial number or unique ID of the current RIS in a network;
(2) a success or failure indication of reception synchronization, control or codebook ID of the RIS, where the feedback signaling may also be placed in a PUSCH;
(3) reporting of a current codebook ID or operation mode of the RIS; and
(4) functional abnormality feedback.

If the base station does not receive a feedback indicating a successful reception, the base station needs to send the collaboration signaling again. After the collaboration succeeds, normal uplink and downlink services are started.

Based on the node management method of any one of the above embodiments, embodiments of the communication device, the computer-readable storage medium, and the computer program product of the present disclosure are provided below.

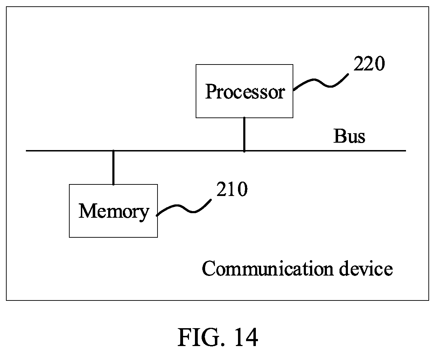

FIG. 14 is a schematic structural diagram illustrating a communication device according to an embodiment of the present disclosure. As shown in FIG. 14, the communication device includes a memory 210 and a processor 220. The device may include one or more memories 210 and one or more processors 220. FIG. 14 uses one memory 210 and one processor 220 as an example. The memory 210 and the processor 220 may be connected by a bus or in other ways. Connection by a bus is used as an example in FIG. 14.

The memory 210, as a computer-readable storage medium, may be configured for storing a software program, a computer-executable program, and modules, for example, program instructions/modules corresponding to the media information processing method provided in any embodiment of the present disclosure. The processor 220 runs the software program, instructions, and modules stored in the memory 210, to implement the node management method.

The memory 210 may mainly include a program storage area and a data storage area. The program storage area may store an operating system, and an application required by at least one function. In addition, the memory 210 may include a high-speed random access memory, and may also include a nonvolatile memory, e.g., at least one magnetic disk storage device, flash memory device, or other nonvolatile solid-state storage device. In some examples, the memory 210 may further include memories located remotely from the processor 220, and the remote memories may be connected to the device via a network. Examples of the network include, but not limited to, the Internet, an intranet, a local area network, a mobile communication network, and combinations thereof.

An embodiment of the present disclosure provides a computer-readable storage medium, storing a computer-executable instruction which, when executed by a processor, causes the processor to implement the node management provided in any embodiment of the present disclosure.

An embodiment of the present disclosure provides a computer program product, including a computer program or computer instructions stored in a computer-readable storage medium. A processor of a computer device reads the computer program or the computer instructions from the computer-readable storage medium and executes the computer program or the computer instructions to cause the computer device to implement the node management provided in any embodiment of the present disclosure.

According to the node management method, communication device, storage medium, and program product provided in the embodiments of the present disclosure, a relay node may receive a first collaboration signaling from a sending node, and parse the first collaboration signaling at a first preset time-frequency domain position according to a pre-received collaboration configuration instruction to obtain a node management parameter, and then manage the relay node according to the node management parameter. In the embodiments of the present disclosure, a time-frequency domain position for parsing a collaboration signaling is defined, and a relay node can be managed according to a node management parameter. As such, an interaction interface and behavior between the sending node and the relay node are agreed on in the embodiments of the present disclosure, such that reliable and efficient communication between the sending node and the relay node can be achieved.

The system architecture and application scenarios described in the embodiments of the present disclosure are for the purpose of illustrating the technical schemes of the embodiments of the present disclosure more clearly, and do not constitute a limitation on the technical schemes provided in the embodiments of the present disclosure. Those having ordinary skills in the art may know that with the evolution of the system architecture and the emergence of new application scenarios, the technical schemes provided in the embodiments of the present disclosure are also applicable to similar technical problems.

Those having ordinary skills in the art can understand that all or some of the steps in the methods disclosed above and the functional modules/units in the system and the apparatus can be implemented as software, firmware, hardware, and appropriate combinations thereof.

In a hardware implementation, the division of the functional modules/units mentioned in the above description does not necessarily correspond to the division of physical components. For example, one physical component may have multiple functions, or one function or step may be jointly executed by several physical components. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and which can be accessed by a computer. In addition, as is known to those having ordinary skills in the art, the communication medium typically includes computer-readable instructions, data structures, program modules, or other data in a modulated data signal such as a carrier or other transport mechanism, and can include any information passing medium.

As used in this specification, the terms "component," "module," "system," and the like are used to denote computer-related entities, hardware, firmware, a combination of hardware and software, software, or software in execution. For example, a component may be, but not limited to, a process running on a processor, a processor, an object, an executable file, a thread of execution, a program, or a computer. An application running on a computing device and the computing device may both be illustrated as components. One or more components may reside in a process or thread of execution. A component may be located on one computer or distributed on two or more computers. In addition, the components may be executed from various computer-readable media having various data structures stored therein. The components may communicate via local and/or remote processes such as in accordance with a signal having one or more data packets (e.g., data from one component interacting with another component in a local system, distributed system, and/or across a network such as the Internet with other systems via the signal).

## Claims

1. A node management method, comprising:
in response to receiving a first collaboration signaling from a sending node, parsing the first collaboration signaling at a first preset resource position according to a pre-received collaboration configuration instruction to obtain a node management parameter; and
performing node management according to the node management parameter.

2. The node management method of claim 1, wherein the first preset resource position is determined according to the collaboration configuration instruction, and the collaboration configuration instruction comprises at least one of:
a transmit frame number and slot number;
a symbol start position of the first collaboration signaling;
a symbol length of the first collaboration signaling;
a frequency domain start position of the first collaboration signaling;
a quantity of frequency domain resources occupied by the first collaboration signaling;
a symbol start position for sending a second collaboration signaling to the sending node;
a symbol length for sending a second collaboration signaling to the sending node;
a frequency domain start position for sending a second collaboration signaling to the sending node;
a quantity of frequency domain resources occupied for sending a second collaboration signaling to the sending node;
a status of allocation of a frequency domain resource of a plurality of first collaboration signalings and a frequency domain resource for sending a second collaboration signaling to the sending node; or
a quantity of slots or symbols by which a second collaboration signaling to be sent to the sending node is delayed relative to the first collaboration signaling.

3. The node management method of claim 1, wherein the collaboration configuration instruction is obtained through Radio Resource Control (RRC) or Media Access Control (MAC) configuration.

4. The node management method of claim 1, wherein the first collaboration signaling is sent by the sending node through a guard period (GP) symbol.

5. The node management method of claim 1, wherein the first collaboration signaling further comprises at least one of:
a node indication identifier for representing a quantity of nodes correspondingly controlled by the first collaboration signaling;
a target identity for representing node identity information of a node correspondingly controlled by the first collaboration signaling;
a cell identity; or
a system frame number.

6. The node management method of claim 5, wherein in response to the first collaboration signaling comprising the target identity, performing node management according to the node management parameter comprises:
performing node management according to the node management parameter in response to the target identity being consistent with a preset identity.

7. The node management method of claim 1, wherein the node management parameter comprises at least one of:
an extended reference signal for timing synchronization, channel estimation, or power control;
a state control parameter for controlling an operation state; or
a codebook identifier for determining a target codebook corresponding to the codebook identifier and generating a beam according to the target codebook.

8. The node management method of claim 7, wherein in response to the node management parameter comprising the state control parameter, the state control parameter comprises at least one of:
an on/off control parameter;
a beam sweeping control parameter;
a power control parameter;
a detection period control parameter;
an orientation control parameter;
an operation mode control parameter; or
a codebook set switching parameter.

9. The node management method of claim 1, wherein the node management parameter is a pseudo-random sequence.

10. The node management method of claim 1, wherein after receiving a first collaboration signaling from a sending node, the method further comprises:
generating a second collaboration signaling according to the first collaboration signaling; and
configuring the second collaboration signaling at a second preset resource position according to the pre-received collaboration configuration instruction, and feeding back the second collaboration signaling to the sending node.

11. The node management method of claim 10, wherein feeding back the second collaboration signaling to the sending node comprises at least one of:
feeding back the second collaboration signaling to the sending node through a guard period symbol;
feeding back the second collaboration signaling to the sending node through a physical uplink channel; or
feeding back the second collaboration signaling to the sending node through a transmission request.

12. The node management method of claim 10, wherein the node management method is applied to a relay node, and the second collaboration signaling comprises at least one of:
a preset identity of the relay node;
an indication indicating that parsing of the first collaboration signaling by the relay node is successful;
an indication indicating that parsing of the first collaboration signaling by the relay node fails;
a current codebook identifier of the relay node;
a current operation mode of the relay node; or
a current functional state of the relay node.

13. The node management method of claim 10, wherein the second preset resource position comprises at least one of a time domain position or a frequency domain position.

14. The node management method of claim 1, wherein the first preset resource position comprises at least one of a time domain position or a frequency domain position.

15. A node management method, comprising:
configuring a first collaboration signaling at a first preset resource position according to a pre-received collaboration configuration instruction; and
sending the first collaboration signaling to a relay node, for the relay node to parse the first collaboration signaling at the first preset resource position to obtain a node management parameter and perform node management according to the node management parameter.

16. The node management method of claim 15, wherein the first preset resource position is determined according to the collaboration configuration instruction, and the collaboration configuration instruction comprises at least one of:
a transmit frame number and slot number;
a symbol start position of the first collaboration signaling;
a symbol length of the first collaboration signaling;
a frequency domain start position of the first collaboration signaling;
a quantity of frequency domain resources occupied by the first collaboration signaling;
a symbol start position for receiving a second collaboration signaling from the relay node;
a symbol length for receiving a second collaboration signaling from the relay node;
a frequency domain start position for receiving a second collaboration signaling from the relay node;
a quantity of frequency domain resources occupied for receiving a second collaboration signaling from the relay node;
a status of allocation of a frequency domain resource of a plurality of first collaboration signalings and a frequency domain resource for receiving a second collaboration signaling from the relay node; or
a quantity of slots or symbols by which receiving of a second collaboration signaling from the relay node is delayed relative to the first collaboration signaling.

17. The node management method of claim 15, wherein the collaboration configuration instruction is obtained through Radio Resource Control (RRC) or Media Access Control (MAC) configuration.

18. The node management method of claim 15, wherein the first collaboration signaling is sent to the relay node through a guard period symbol.

19. The node management method of claim 15, wherein the first collaboration signaling further comprises at least one of:
a node indication identifier for representing a quantity of nodes correspondingly controlled by the first collaboration signaling;
a target identity for representing node identity information of one or more nodes correspondingly controlled by the first collaboration signaling;
a cell identity; or
a system frame number.

20. The node management method of claim 15, wherein the node management parameter comprises at least one of:
an extended reference signal for timing synchronization, channel estimation, or power control;
a state control parameter for controlling an operation state; or
a codebook identifier for determining a target codebook corresponding to the codebook identifier and generating a beam according to the target codebook.

21. The node management method of claim 20, wherein in response to the node management parameter comprising the state control parameter, the state control parameter comprises at least one of:
an on/off control parameter;
a beam sweeping control parameter;
a power control parameter;
a detection period control parameter;
an orientation control parameter;
an operation mode control parameter; or
a codebook set switching parameter.

22. The node management method of claim 15, wherein the node management parameter is a pseudo-random sequence.

23. The node management method of claim 15, wherein after sending the first collaboration signaling to a relay node, the method further comprises:
receiving a second collaboration signaling fed back by the relay node based on the first collaboration signaling; and
parsing the second collaboration signaling at a second preset resource position according to the pre-received collaboration configuration instruction.

24. The node management method of claim 23, wherein receiving a second collaboration signaling fed back by the relay node based on the first collaboration signaling comprises:
receiving the second collaboration signaling fed back by the relay node through a guard period symbol;
receiving the second collaboration signaling fed back by the relay node through a physical uplink channel; or
receiving the second collaboration signaling fed back by the relay node through a transmission request.

25. The node management method of claim 23, wherein the second collaboration signaling comprises at least one of:
a preset identity of the relay node;
an indication indicating that parsing of the first collaboration signaling by the relay node is successful;
an indication indicating that parsing of the first collaboration signaling by the relay node fails;
a current codebook identifier of the relay node;
a current operation mode of the relay node; or
a current functional state of the relay node.

26. The node management method of claim 23, wherein the second preset resource position comprises at least one of a time domain position or a frequency domain position.

27. The node management method of claim 15, wherein the first preset resource position comprises at least one of a time domain position or a frequency domain position.

28. A communication device, comprising:
at least one processor; and
at least one memory, configured for storing at least one program,
wherein the at least one program, when executed by the at least one processor, causes the at least one processor to perform the node management method of any one of claims 1 to 14 or the node management method of any of claims 15 to 27.

29. A computer-readable storage medium, storing a processor-executable program which, when executed by a processor, causes the processor to perform the node management method of any one of claims 1 to 14 or the node management method of any of claims 15 to 27.

30. A computer program product, comprising a computer program or computer instructions stored in a computer-readable storage medium, wherein a processor of a computer device reads the computer program or the computer instructions from the computer-readable storage medium and executes the computer program or the computer instructions to cause the computer device to perform the node management method of any one of claims 1 to 14 or the node management method of any one of claims 15 to 27.
